# EUROPEAN PATENT APPLICATION

(11) **EP 1 365 555 A1**
(43) Date of publication of application: **26.11.2003**
(21) Application number: 02253528.0
(22) Date of filing: 20.05.2002
(51) Int. Cl.: H04L 25/14

(54) **Circular buffer for delay compensation in parallel transmission**

(71) Applicant: Texas Instruments Limited, Northampton Business Park, Northampton NN4 7YL (GB)
(72) Inventor: Moyse,Phil, Carlton, Bedford. MK43 7JR (GB); Robertson, Iain, Cople, Bedford. MK44 3TT (GB)
(74) Representative: Legg, Cyrus James Grahame

(57) **Abstract**

A receiver circuit and method for the alignment of data transmitted in separate streams that may be subject to different time delays. Serial-to-parallel conventers determine the boundaries between the symbols. Variable depth pipelines compensate for any whole symbol offsets between channels. Circular buffers remove any phase offset between the channels. Data is written to the circular buffers under the control of write clock signals derived from the incoming data streams and read from the circular buffers under the control of a read clock signal that is common to all channels. A corresponding transmitter circuit and method is also described.

## Description

The present invention relates to the transmission and reception of data and more particularly to the alignment of time-related data transmitted in separate data streams that may be subject to different time delays.

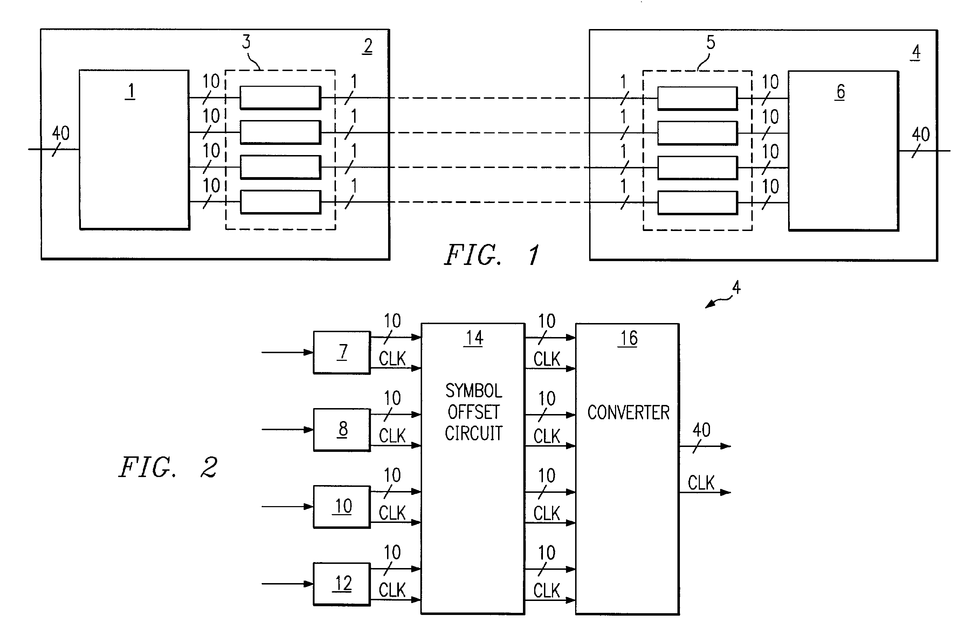

Figure 1 shows a data transmission system, having a transmitter 2 and a receiver 4, in which the present invention may be put to use. The transmitter 2 has a 40-bit input that is divided into four 10-bit data streams by converter 1. The four 10-bit data streams are converted into serial data streams by four parallel-to-serial converters 3 and are transmitted as four independent serial data signals. The receiver 4 comprises four serial-to-parallel converters 5 that convert the four serial data streams into four 10-bit data signals and a converter 6 that converts the four independent 10-bit data streams into 40-bit data words.

The system of Figure 1 may be used for a XAUI system, which is a 10Gb ethernet standard under development at the IEEE (802.3ae). XAUI is intended to achieve 10Gbps over a connection such as copper wire (although other connections, such as optical connections, may be used) by scaling gigabit ethernet technology from 1 to 2.5Gbps, and then using 4 links.

For example, in the system of Figure 1, the four serial links may each transmit data at about 3.2Gbits/second with the receiver converting that to four 10-bit streams (each at 320MHz) before converting those streams into a single 40-bit data stream (at 320MHz).

Figure 2 shows, in block diagram form, an implementation of the receiver 4 of the data transmission system of Figure 1. The receiver comprises four differential-to-parallel converters 7, 8, 10 and 12, one for each data stream, a symbol offset circuit 14 and a converter circuit 16.

Each differential-to-parallel converter takes the incoming data stream, converts it to a differential electrical signal and produces from that a 10-bit parallel data signal and an associated local clock signal. Each local clock signal is generated from the data stream itself in a manner known in the art. The local clock signals have an arbitrary phase relationship with respect to one another since each local clock is optimally aligned to provide optimum sampling for that channel.

The differential-to-parallel converters 7, 8, 10 and 12 include symbol alignment circuitry that detect the original symbol boundaries so that the 10-bit words output by the differential-to-parallel converters are aligned along symbol boundaries. Thus each 10-bit parallel word output by a differential-to-parallel converter makes up a single symbol with all of the bits of that symbol in the correct position. Methods of doing this are known in the art and do not form a part of the present invention.

The data transmitted over the four serial data links are subject to varying delays. The data arriving at the input of any particular differential-to-parallel converter may be significantly offset with respect to the data in other channels. The offsets may be of the order of up to 80 bits (i.e. 8 x 10-bit symbols). Thus, although the 10-bit symbols output by the differential-to-parallel converters 7, 8, 10 and 12 are aligned along symbol boundaries as noted above, the channels may be offset by several symbols. Accordingly, there is a need to realign the symbols of the data output by the different differential-to-parallel converters with each other before the original 40-bit data words can be regenerated. This function is performed by symbol offset circuit 14.

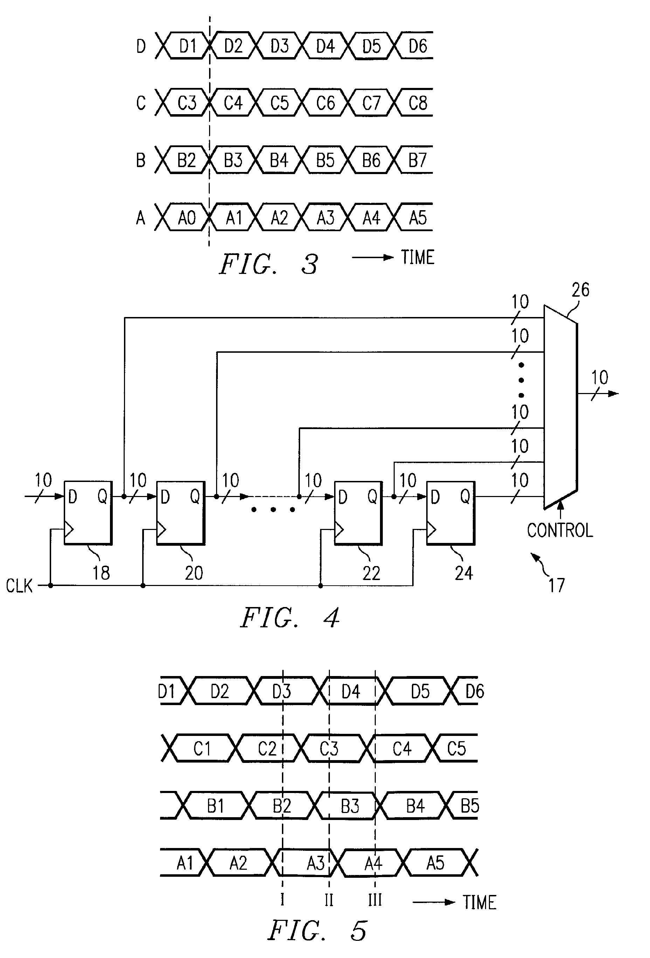

Figure 3 is a timing diagram representing four data channels (A to D). In Figure 3, symbol A0 is aligned with symbols B2, C3 and D1. Thus channel C is the most advanced (i.e. has been delayed the least) and channel A is the most retarded (i.e. has been delayed the most).

The symbol offset circuit 14 must compensate for the different delays so that symbols A0, B0, C0 and D0 are aligned. It should be noted that the waveforms of Figure 3 are a simplification since the symbol boundaries of the outputs of each of the serial-to-parallel converters 7, 8, 10 and 12 are aligned with respect to one another (as shown by the dotted line in Figure 3 at one of those symbol boundaries). In reality, the symbols have an arbitrary phase relationship with respect to one another. Thus, in addition to aligning the respective symbols with corresponding symbols in other data channels, the clock positions of the symbols must also be aligned before the original 40-bit words can be regenerated; this problem is discussed in detail below.

Figure 4 shows a variable depth pipeline, indicated generally by the reference numeral 17, suitable for use as one channel of the symbol offset circuit 14. The variable depth pipeline 17 consists of nine 10-bit wide registers (four are shown, labelled 18, 20, 22 and 24) each having a 10-bit input (D), a 10-bit output (Q) and a clock input. The registers are connected in a chain so that the output of the first register is coupled to the input of the second register, the output of the second register is coupled to the input of the third register and so on. The input of the first register is coupled to the output of the appropriate differential-to-parallel data converter. One pipeline is provided for each data channel and the clock input of each pipeline is coupled to the local clock recovered from the respective data channel.

The output of each data register 18, 20, 22, 24 of the variable depth pipeline 17 is coupled to a 10-bit wide input of a 9-way multiplexer 26. The multiplexer 26 has a control input to select one of the nine possible inputs. The 10-bit output of the multiplexer 26 provides the output of the variable depth pipeline.

The pipeline of Figure 4 allows 10-bit words to be sequentially clocked into the pipeline and one of those 10-bit words is selected, by the multiplexer 26, as the output. A pipeline is provided for each of the four data channels and so the 10-bit output for each channel can be selected from a different position in the variable depth pipeline for each data channel according to the delay of that channel relative to the other channels.

The relative position in time of each data channel is determined by the transmission, at periodic intervals, of a reserved word on each data channel. By setting the control input to each multiplexer 26 so that the reserved words are aligned, the data in each channel is aligned with respect to the other channels.

In the example waveforms of Figure 3, a pipeline would be provided for each of channels A, B, C and D. Channels B, C and D would need to be delayed by 2, 3 and 1 cycles respectively with respect to channel A. If the output of the multiplexer 26 of the pipeline of channel A selects the output of the first register 18, then the multiplexers of channels B, C and D would need to select the outputs of the third, fourth and second registers respectively.

As mentioned above, the waveform shown in Figure 3, where the symbol boundaries occur at the same point in time for all channels, is a simplification. The outputs of the variable depth pipelines 17 of the symbol offset circuit 14 provide 10-bit symbols which are generally aligned relative to the 10-bit symbols of the other channels. However, the channels cannot at this stage be recombined into a single 40-bit data word since the symbols produced have an arbitrary phase relationship (between 0 and 360 degrees of a symbol clock) relative to one another.

Figure 5 shows a set of waveforms for channels A, B, C and D that might be seen at the outputs of the multiplexers 26 (i.e. after symbol offset).

In the example of Figure 5, channel D is the most advanced, followed by channels A, C and B respectively. Channel B is almost an entire cycle behind that of channel D (i.e. as channel D is at the end of the cycle receiving symbol D1, channel B is only just starting to receive symbol B1).

In order to reassemble the data word originally transmitted, converter circuit 16 extracts, for example, symbols D2, C2, B2 and A2 and assembles them into a single 40-bit word. If the channels were aligned along symbol boundaries (as in Figure 3), then it would be possible to sample the data using the clocks recovered by the differential-to-parallel converters 7, 8, 10 and 12 to recover the correct data. Indeed the data could be sampled at any point during a symbol, provided that the sample and hold times of the sampling circuitry were not violated by data transitions. This, however, does not work with the example of Figure 5.

Consider the point labelled I in Figure 5. If the data on each channel were sampled at point I, the data word recovered would be D3 C2 B2 A3. Sampling at point II would give D4 C3 B3 A3. Sampling at point III would be worse since the data in channel B is indeterminate. It can be seen that no single sampling point can be chosen that samples the desired 40-bit output D2 C2 B2 A2.

Thus sampling the data output by the symbol offset circuit 14 in an attempt to regenerate the originally transmitted data is not adequate. A more sophisticated means of extracting the 40-bit word originally transmitted is therefore required.

The present invention provides a circuit having a plurality of channels, each channel having a data input, a data output and a circular buffer disposed between the data input and the data output, the circular buffer comprising a plurality of latches,
wherein:
each circular buffer comprises means for writing data at said data input to a first selected latch of said circular buffer and means for providing data from a second selected latch of said circular buffer at said data output,
for each circular buffer, the first selected latch is clocked by a local write clock signal, each channel having its own local write clock signal;
for each circular buffer, data is provided at said data output under the control of a read clock signal, the read clock signal being common to all channels, whereby data at each data output has substantially the same phase.

Each local write clock signal may have a phase determined by the phase of the data associated with the data input of the respective channel. Further, each local write clock signal may have a phase aligned to provide optimum sampling of the data associated with the data input of the respective channel.

The read clock signal is preferably the local write clock signal of a selected one of said plurality of channels, the selected channel being a master channel, the other channels being slave channels.

The read clock signal may be provided as a clock output of the circuit.

For each channel, said first selected latch is preferably determined by the value of a write pointer and said second selected latch is preferably determined by the value of a read pointer. The value of the read pointer is preferably the same for each of said plurality of channels. The read pointer is preferably incremented using the read clock signal. The write pointer is preferably incremented by the respective local write clock signal. The write pointer of the master channel may be fixed relative to the read pointer, that write pointer being a master write pointer, the other write pointers being slave write pointers. The value of each slave write pointer is preferably sampled and, if, on sampling, a slave write pointer is in an illegal state relative to the read pointer, that slave write pointer may be prevented from being incremented for one cycle of the respective local write clock.

A slave write pointer may be deemed to be in an illegal state relative to the read pointer if the first selected one of said plurality of data storage devices of the respective slave channel is either the same as the second selected latch or is the same as the second selected latch on the previous read clock cycle.

The slave write pointers may be sampled each time the read pointer enters a predetermined state.

In one embodiment, a slave write pointer is not prevented from being incremented if that slave write pointer makes only a minor incursion into the illegal state. An additional sample of the slave write pointer may be taken, slightly delayed from the first, and the slave write pointer may be prevented from being incremented if both pointers are in the illegal state. An additional sample of the local write pointer may be taken, slightly in advance of the first, and the slave write pointer may be prevented from being incremented only when all the pointers are in the illegal state.

The read and write pointers are preferably implemented using a Gray code.

The circular buffer may comprise four latches and the master write channel may be fixed such that, for the master channel, the second selected latch is two latches away from the first selected latch.

The circular buffer may comprise six latches and the master write channel may be fixed such that, for the master channel, the second selected latch is three latches away from the first selected latch.

The means for writing data at said data input to the first selected latch may comprise a select circuit for each latch in the plurality, one of said select circuits passing the local write clock signal to the first selected latch, the other select circuits blocking the local write clock signal.

A multiplexing arrangement may be provided for each latch in the plurality, each multiplexing arrangement having a first input coupled to the data input of the circuit, a second input coupled to the output of the respective latch and an output coupled to the input of the latch, the multiplexing arrangement associated with the first selected latch passing the data at the data input to that latch, the other multiplexing arrangement passing the respective latch outputs to the respective latch inputs.

The means for providing data from a second selected latch of said circular buffer at said data output may be a multiplexer.

In one embodiment, a symbol offset circuit comprising a pipeline for each channel of the plurality of channels is provided, each pipeline having an input for receiving symbols of data from a previous stage of the circuit and an output for passing symbols of data to a next stage of the circuit, the pipeline delaying the symbols of data by an integer number of symbol cycles, the length of the delay being determined by the value of a control signal. The next stage of the circuit may comprise said plurality of circular buffers. Alternatively, the previous stage of the circuit may comprise said plurality of circular buffers.

Each pipeline is preferably a variable depth pipeline comprising a plurality of data storage devices connected in series, the input of said pipeline being the data input of a first of said plurality of data storage devices, the output of the pipeline being the output of a selected one of said data storage device, said control signal selecting said selected one, said data registers being clocked by the local write clock signal of the respective channel.

The output of the pipeline may be selected using a multiplexer, the output of each of said plurality of data storage device being coupled to an input of said multiplexer.

The symbol offset circuit may be arranged to delay the symbols received at said plurality of inputs such that a single data word received across all of said plurality of channels is correctly aligned at the output of said circuit.

A control circuit may be provided for receiving the outputs of the circuit and generating said control signal for each of said pipelines. The control circuit preferably adjusts the delays of said pipelines such that a repeating reserved word is aligned across said plurality of channels.

Each channel preferably further comprises a converter for converting a serial data stream at the input of the channel into symbols of data for processing by the circular buffer. Said converter may generate a clock signal having a phase derived from the phase of the symbols of data output by the converter, said clock signal being the local write clock signal. The converter may be arranged to detect symbol boundaries and to convert the serial input into symbols correctly aligned along those symbol boundaries.

The converter means is preferably a differential-to-parallel converter.

The present invention also provides a circuit having a plurality of channels, each channel having a data input for receiving data for transmission, a data output and a circular buffer disposed between the data input and the data output, the circular buffer comprising a plurality of latches,
wherein:
each circular buffer comprises means for writing data at said data input to a first selected latch of said circular buffer and means for providing data from a second selected latch of said circular buffer at said data output;
for each circular buffer, the first selected latch is clocked by a write clock signal that is common to all channels;
for each circular buffer, data is provided at said data output under the control of a read clock signal such that each data output has a phase aligned with the respective read clock signal.

The first selected one of said plurality of data storage devices may be determined by the value of a write pointer and the second selected one of said plurality of data storage devices may be determined by the value of a read pointer. The value of the write pointer is preferably the same for each of said plurality of circular buffers. Each read pointer may be incremented by the read clock signal of the respective channel and said read clock signal may be generated by a phase locked loop.

The value of each read pointer may be sampled and if, on sampling, a read pointer is in an illegal state relative to the write pointer, that read pointer may be prevented from being incremented for one cycle of the local read clock signal.

A read pointer may be deemed to be in an illegal state relative to the write pointer if the second selected one of said plurality of data storage devices is either the same as the first selected latch or is the same as the first selected latch on the previous write clock cycle.

The read pointers may be sampled each time the write pointer enters a predetermined state.

The read pointer may not be prevented from being incremented if that read pointer makes only a minor incursion into the illegal state. An additional sample of the read pointer may be taken, slightly delayed from the first, and the read pointer may be prevented from being incremented only if both pointers are in the illegal state. An additional sample of the read pointer may be taken, slightly in advance of the first, and the read pointer may be prevented from being incremented only when all the pointers are in the illegal state.

The read pointer and the write pointer are preferably implemented using a Gray code.

The circular buffer may comprise four latches. The circular buffer may comprise six latches.

The present invention provides a transmitter including means for transmitting the signals at the outputs of said circuit and also provides a receiver including means for receiving data for each of said plurality of channels.

The present invention further provides a system comprising a transmitter and a receiver.

A data link coupling the outputs of the transmitter to respective inputs of the receiver may also be provided. The data link may be a copper wire. Alternatively, the data link may be an optical link.

The present invention provides a method of converting data at inputs of a plurality of data channels into a single parallel data stream aligned to a read clock signal, the method comprising the steps of :
for each channel, writing the data received at the input to a first selected latch of a circular buffer, the first selected latch being clocked by a local write clock signal, each channel having its own write clock signal; and
for each channel, generating an output of the circular buffer by reading data from a second selected latch of said circular buffer under the control of the read clock signal, the read clock signal being common to all channels.

For each channel, the local write clock signal preferably has a phase determined by the phase of the data associated with the data input of said channel. Each local write clock signal may have a phase aligned to provide an optimum sampling of the data associated with the data input of the respective channel.

The read clock signal is preferably the local write clock signal of a selected one of said plurality of channels, the selected channel being a master channel, the other channels being slave channels.

For each channel, said first selected latch is preferably determined by the value of a write pointer and said second selected latch is preferably determined by the value of a read pointer. The value of the read pointer may be the same for each of said plurality of channels.

The read pointer is preferably incremented using the read clock signal. For each channel, the write pointer may be incremented by the respective local write clock signal.

The write pointer of the master channel is preferably fixed relative to the read pointer, that write pointer being a master write pointer, the other write pointers being slave write pointers. The value of each slave write pointer may be sampled and, if, on sampling, a slave write pointer is in an illegal state relative to the read pointer, that slave write pointer may be prevented from being incremented for one cycle of the respective local write clock.

In one embodiment, a slave write pointer is in an illegal state relative to the read pointer if the first selected latch of the respective slave channel is either the same as the second selected latch or is the same as the second selected latch on the previous read clock cycle.

The slave write pointers may be sampled each time the read pointer enters a predetermined state.

A slave write pointer may not be prevented from being incremented if that slave write pointer makes only a minor incursion into the illegal state. An additional sample of the local write pointer may be taken, slightly delayed from the first, and the slave write pointer may be prevented from being incremented only if both pointers are in the illegal state. An additional sample of the slave write pointer may be taken, slightly in advance of the first, and the slave write pointer may be prevented from being incremented only when all the pointers are in the illegal state.

Each channel preferably receives symbols of data at the input and passes symbols of data to the output via a symbol offset means, the symbols of data are preferably delayed by an integer number of symbol cycles by the symbol offset means, the length of the delay being determined by the value of a control signal.

For each channel, the output of the symbol offset means may provide the input of said first selected latch of said circular buffer. Alternatively, for each channel, the output of said second selected latch of said circular buffer may provide the input of the symbol offset means.

The symbol offset means may be arranged to delay the symbols received at said plurality of inputs such that a single data word received across all of said plurality of channels is correctly aligned at the output of said circuit. The symbol offset means may be arranged to adjust the delay of each channel such that a repeating reserved word is aligned across said plurality of channels.

For each channel, serial-to-parallel converting means for converting a serial data stream at the input of the channel into symbols of data for processing by the circular buffer is preferably provided.

The serial-to-parallel converting means may be arranged to detect symbol boundaries and to convert the serial data stream into symbols of data that are correctly aligned along those symbol boundaries.

The present invention further provides a method of converting data at inputs of a plurality of data channels aligned to a write clock signal into a plurality of outputs, each aligned to a local write clock signal, the method comprising the steps of :
for each channel, writing the data received at the input to a first selected latch of a circular buffer, the first selected latch being clocked by the write clock signal, the write clock signal being common to all channels; and
for each channel, generating an output of the circular buffer by reading data from a second selected latch of said circular buffer under the control of the read clock signal, each channel having its own read clock signal.

For each channel, the first selected latch is preferably determined by the value of a write pointer and the second selected latch is determined by the value of a read pointer. The value of the write pointer is preferably common to all channels. Each read pointer may be incremented by the read clock signal of the respective channel.

The value of each read pointer may be sampled and if, on sampling, a read pointer is in an illegal state relative to the write pointer, that read pointer may be prevented from being incremented for one cycle of the local read clock signal.

In one embodiment, a read pointer is in an illegal state relative to the write pointer if the second selected latch of a respective channel is either the same as the first selected latch or is the same as the first selected latch on the previous write clock cycle. The read pointers may be sampled each time the write pointer enters a predetermined state.

In one embodiment, a read pointer is not prevented from being incremented if that read pointer makes only a minor incursion into the illegal state.

An additional sample of the read pointer may be taken, slightly delayed from the first, and the read pointer may be prevented from being incremented only if both pointers are in the illegal state. An additional sample of the read pointer may be taken, slightly in advance of the first, and the read pointer may be prevented from being incremented only when all the pointers are in the illegal zone.

The respective read and write pointers may be implemented using a Gray code.

An embodiment of the invention will now be described, by way of example only, with reference to the accompanying drawings, of which:
- FIGURE 1: shows a block diagram of a data transmission system for transmitting and receiving 40-bit data signals;
- FIGURE 2: shows a block diagram of a receiver for use in the data transmission system of Figure 1;
- FIGURE 3: demonstrates the misalignment of symbols at the input of the symbol offset circuit of Figure 2;
- FIGURE 4: is a circuit for implementing the symbol offset circuit of Figure 3;
- FIGURE 5: demonstrates the misalignment of data at the output of the symbol offset circuit of Figure 4;
- FIGURE 6a: shows a block diagram of a receiver in accordance with an embodiment of the present invention;
- FIGURE 6b: shows a block diagram of a receiver in accordance with an embodiment of the present invention;
- FIGURE 7: is a circular buffer used to implement one channel of a converter circuit of the receiver of Figures 6a and 6b;
- FIGURE 8: is a circuit diagram of a converter circuit of the receiver of Figures 6a and 6b;
- FIGURE 9: is a phase diagram illustrating one of the functions of the circuit of Figure 8;
- FIGURE 10: is a timing diagram illustrating one of the functions of the circuit of Figure 8;
- FIGURE 11: is a circuit diagram of part of a control circuit suitable for use in the circular buffer of Figure 7;
- FIGURE 12: is a timing diagram illustrating the functionality of the circuit of Figure 8;
- FIGURE 13: is a timing diagram illustrating the functionality of the circuit of Figure 8;
- FIGURE 14: is a block diagram of a transmitter in accordance with the present invention;
- FIGURE 15: is a phase diagram illustrating one of the functions of the transmitter of Figure 14.

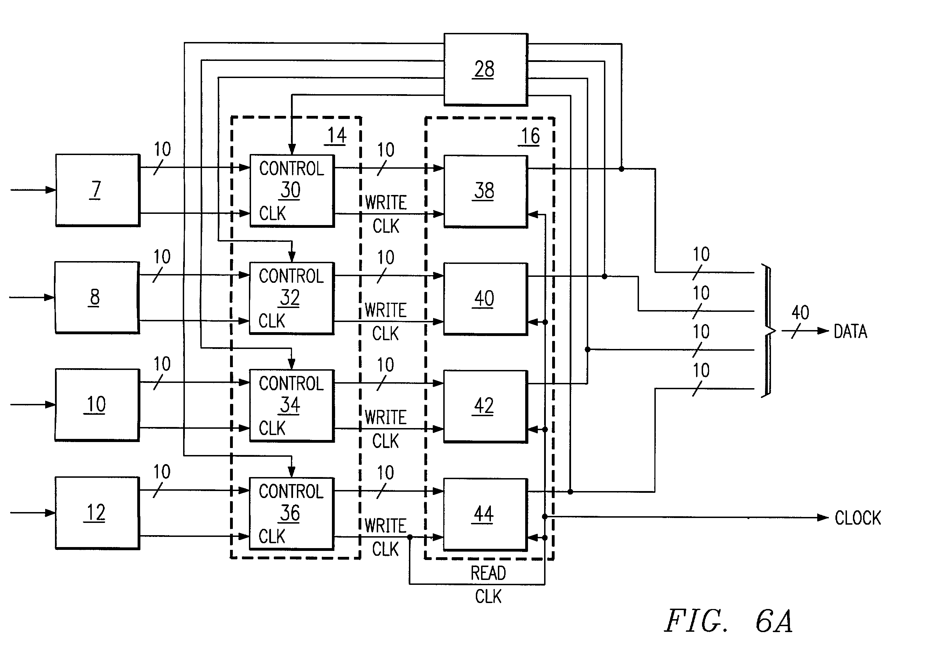

Refer to Figure 6a. A block diagram of a receiver in accordance with the present invention is shown. The block diagram comprises four differential-to-parallel converters 7, 8, 10 and 12, one for each of four data streams, a symbol offset circuit 14, a converter 16 and a control circuit 28. Symbol offset circuit 14 comprises four variable depth pipelines 30, 32, 34 and 36, each pipeline being like the pipeline 17 of Figure 4. The converter 16 comprises four circular buffers 38, 40, 42 and 44 as described below. The data and clock outputs of each differential-to-parallel converter 7, 8, 10 and 12 are coupled to data and clock inputs of respective variable depth pipelines 30, 32, 34 and 36. The data and clock outputs of variable depth pipelines 30, 32, 34 and 36 are coupled to respective data and write clock inputs of circular buffers 38, 40, 42 and 44. The write clock input of one of circular buffers 38, 40, 42 and 44 is designated as the read clock for circular buffers 38, 40, 42 and 44 and is also provided as the clock output of the receiver. (In the example of Figure 6a, it is the write clock of circular buffer 44 that is selected as the read clock and the output clock of the receiver.) Data outputs of circular buffers 38, 40, 42 and 44 together form a 40-bit output of the receiver and are also coupled to the input of control circuit 28. The output of control circuit 28 provides the control inputs to pipelines 30, 32, 34 and 36.

The receiver of Figure 6a essentially aligns a number of serialised data streams into a single 40-bit parallel stream. This is achieved in three parts:
1. Symbol alignment circuitry within the serial-to-parallel converters 7, 8, 10 and 12 determine the boundaries between the symbols and arrange the symbols along those boundaries in a well-known method;
2. Variable depth pipelines of symbol offset circuit 14 compensate for any whole symbol offsets between channels; and
3. Circular buffers of converter 16 remove any phase offset between the channels.

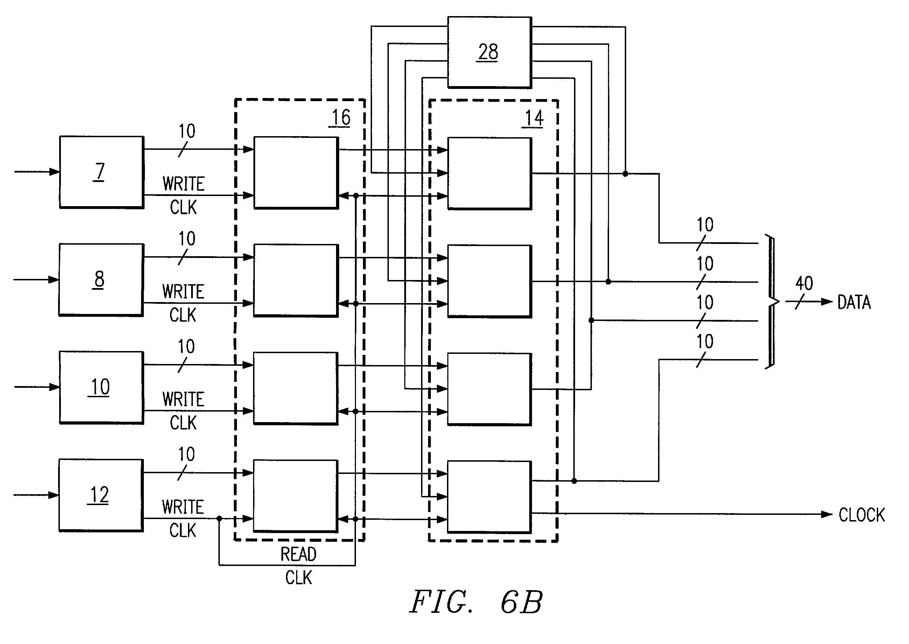

In the embodiment shown in Figure 6a, the circular buffers of converter 16 are placed after the variable depth pipelines of symbol offset circuit 14. This is not essential. Figure 6b is identical to Figure 6a except that the variable depth pipelines of symbol offset circuit 14 are placed after the circular buffers of converter 16. The arrangement of Figure 6b has an advantage over that of Figure 6a in that it removes the need to synchronise control data for the variable depth pipelines from the read domain (synchronised to the read clock) to the write domains (synchronised to the local write clock - see below) of the respective channel.

The receiver of Figure 6b aligns the serialised data streams at the inputs of serial-to-parallel converters 7, 8, 10 and 12 into a single 40-bit parallel stream as follows:
1. Symbol alignment circuitry within the serial-to-parallel converters 7, 8, 10 and 12 determine the boundaries between the symbols and arrange the symbols along those boundaries in a well-known method;
2. Circular buffers of converter 16 remove any phase offset between the channels; and
3. Variable depth pipelines of symbol offset circuit 14 compensate for any whole symbol offsets between channels.

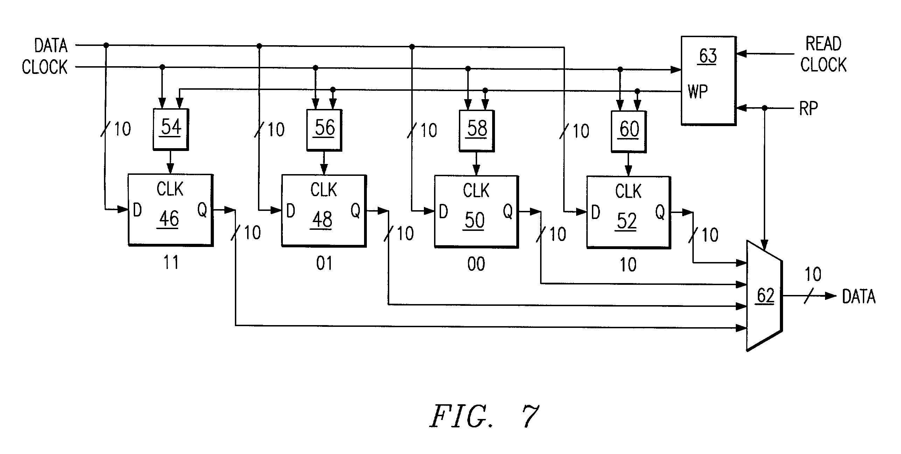

Figure 7 is a circuit diagram of one of circular buffers 38, 40, 42 and 44 of converter 16. Each circular buffer comprises four 10-bit registers 46, 48, 50 and 52, four select circuits 54, 56, 58 and 60, a multiplexer 62 and a control circuit 63. Each circular buffer has data and clock inputs received from the respective one of variable depth pipelines 30, 32, 34 and 36 in the embodiment of Figure 6a and from a respective serial-to-parallel converter 7, 8, 10 and 12 in the embodiment of Figure 6b and generates a data output. The control circuit 63 receives a read pointer (discussed below), the read clock (as shown in Figures 6a and 6b) and the local write clock. The control circuit 63 generates a write pointer (WP) from the read pointer (RP) in a manner discussed below. The control circuit 63 passes the write pointer (WP) to a first input of each of select circuits 54, 56, 58 and 60.

The 10-bit data input to the circular buffer is coupled to the D input of each of 10-bit registers 46, 48, 50 and 52. The Q output of each of 10-bit registers 46, 48, 50 and 52 is coupled to an input of multiplexer 62. The select input of multiplexer 62 is coupled to the read pointer RP. Thus, the read pointer RP is used to select which one of registers 46, 48, 50 and 52 provides the data output of the circular buffer.

The write clock input is coupled to a second input of each of select circuits 54, 56, 58 and 60 (the first input of each of select circuits 54, 56, 58 and 60 being coupled to the write pointer (WP) as discussed above). One of select circuits 54, 56, 58 and 60 (as chosen by the write pointer) passes the clock signal to an associated one of registers 46, 48, 50 and 52. Select circuits 54, 56, 58 and 60 are essentially clock enable circuits and could be implemented in a variety of ways, for example as a simple combinatorial logic circuit.

Thus, the incoming data is written to one of registers 46, 48, 50 and 52, that register being determined by the value of write pointer WP, and the data output is read from one of registers 46, 48, 50 and 52, that register being determined by the value of read pointer RP.

In an alternative embodiment, the clock gating arrangement using select circuits 54, 56, 58 and 60 is replaced with a multiplexing arrangement which selects, for each of the 10-bit latches 46, 48, 50 and 52 whether the new data (provided by the data input of Figure 7) is provided at the D-input of the register or whether the old data (provided by the Q-output of the respective register) is provided at that D-input.

Ordinarily, each register of the circular buffer is written to in turn. Thus, if an incoming data word is written to register 46, the next data word will be written to register 48, the next to register 50, then register 52 and then register 46 again. Similarly, data is read out of registers in turn.

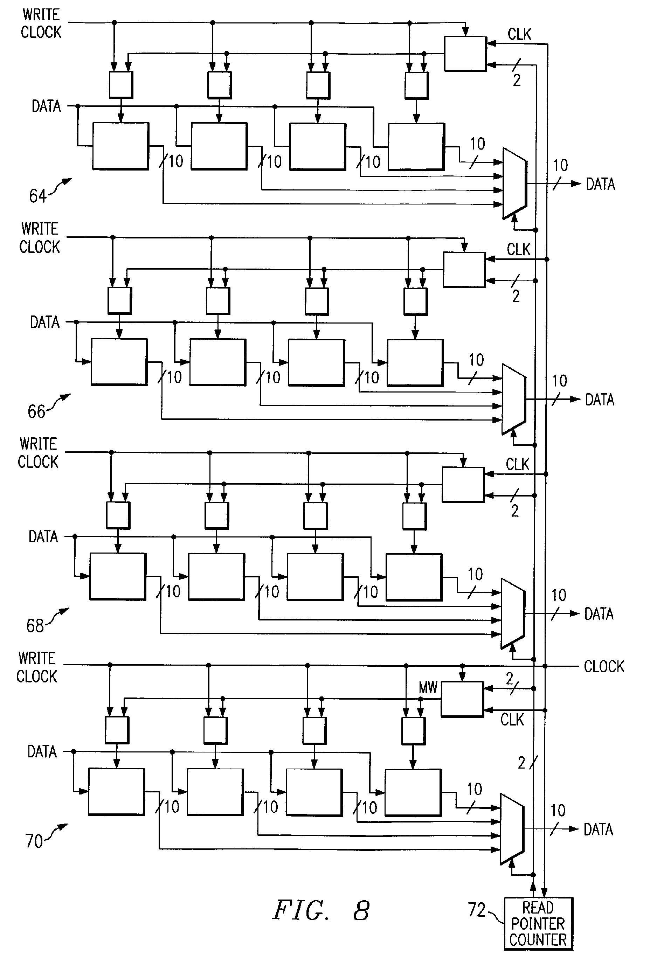

Figure 8 is an overall circuit diagram of the converter circuit 16. Converter circuit 16 comprises four channels, indicated generally by the reference numerals 64, 66, 68 and 70. Each channel of converter circuit 16 includes a circular buffer as shown in Figure 7.

In the example of Figure 8, channel 70 is designated as the master channel. The local clock for channel 70 (i.e. that obtained from its respective differential-to-parallel converter) is provided as an input to the control circuit 63 of the circular buffer of each of the channels 64, 66, 68 and 70 and is also provided as the output clock of both the converter circuit 16 and the receiver (as shown in Figures 6a and 6b).

The read pointer RP is generated by a read pointer counter 72; that counter being clocked by the read clock signal. Thus the read pointer RP is synchronised to the write clock of the master channel. Since four registers 46, 48, 50 and 52 are provided for each circular buffer, a two bit (i.e. four state) code is required to identify the four registers individually. Thus the counter that is used to generate the read pointer is a two-bit counter. The read pointer counter 72 uses a 2-bit Gray Code (00, 10, 11, 01), as discussed below.

For the master channel (channel 70), the read pointer and the write pointer are always two cycles apart. Thus the output of the control circuit 63 for channel 70 is always two cycles away from the output of the read pointer counter 72. In an alternative embodiment, the master write pointer MW is derived from the same counter that generates the read pointer by simply decoding, with the select circuits, the counter outputs differently so that the control circuit 63 for the master channel (channel 70 in this case) is not required.

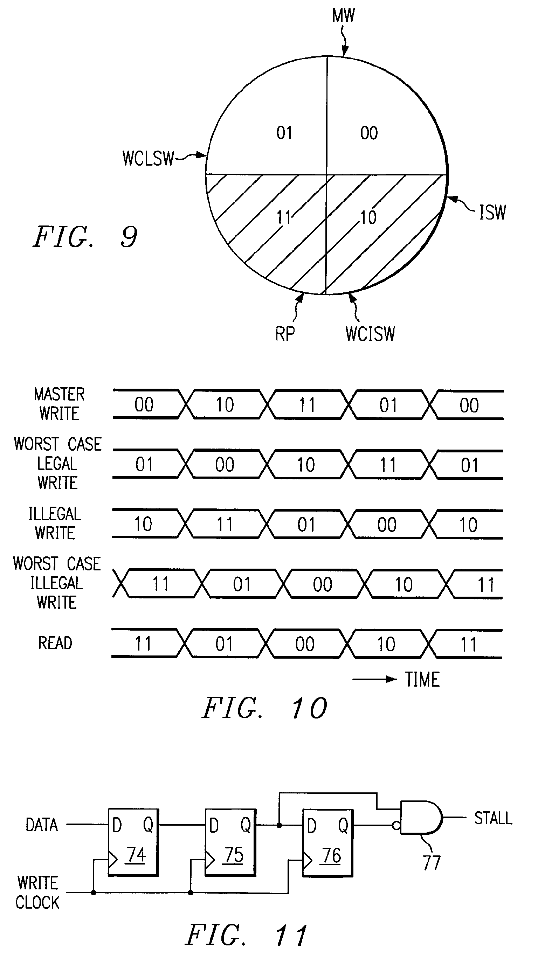

The function of control circuits 63 for each of channels 64, 66 and 68 can be seen with reference to the phase diagram of Figure 9. The phase diagram of Figure 9 is divided into four sectors labelled 00, 10, 11 and 01, which values correspond to the Gray Code values of the read and write pointers. In Figure 9, the read pointer RP is positioned in sector 11. Assume that sector 11 corresponds to register 46 of the circular buffer of Figure 7. (For ease of reference, the register 46 of Figure 7 is labelled '11'. Similarly, registers 48, 50 and 52 in Figure 7 are labelled '01', '00', and '10' respectively.) Thus, at the time represented in Figure 9, the register 46 of each of channels 64, 66, 68 and 70 is being read.

Since the master write pointer is always two clock cycles (or 180 degrees on the phase wheel of Figure 9) apart from the read signal, the master write pointer (MW) is in sector 00 (i.e. opposite the read pointer). Sector 00 represents register 50 (see Figure 7). Thus, for the master channel (channel 70), data is being read from register 46 and written to register 50.

The write pointers for channels 64, 66 and 68 are aligned with the local clock signal of the respective channel as obtained from the respective serial-to-parallel converter. Each local clock signal has an arbitrary phase relationship with respect to the master channel. Thus, in each channel, the so-called slave write pointer may be up to a whole cycle ahead of or behind the master write signal.

It is clearly not permissible for a slave write pointer to be in the same sector as the read pointer since this would mean that one of the registers of the circular buffer would simultaneously be written to and read from. Further, with the read pointer in sector 11, it is not permissible for a slave write pointer to be in sector 10 (for the reasons discussed below). The only permissible sectors for a slave write pointer to be in are 00 (where the master write pointer is) or 01. This is discussed below with reference to Figure 10.

Figure 10 is a timing diagram showing a position of a number of pointers. The first line of the timing diagram represents the master write pointer. The master write pointer MW is initially in sector 00 and moves round the phase diagram clockwise from sector 00 through sectors 10, 11, 01 and back to 00 (i.e. the write pointer moves from register 50 through registers 52, 46, 48 and back to register 50).

The second line of the timing diagram represents a slave write pointer (WCLSW) that is permissible (a legal slave write pointer). When the master write pointer is in sector 00, this legal slave write pointer is in sector 01.

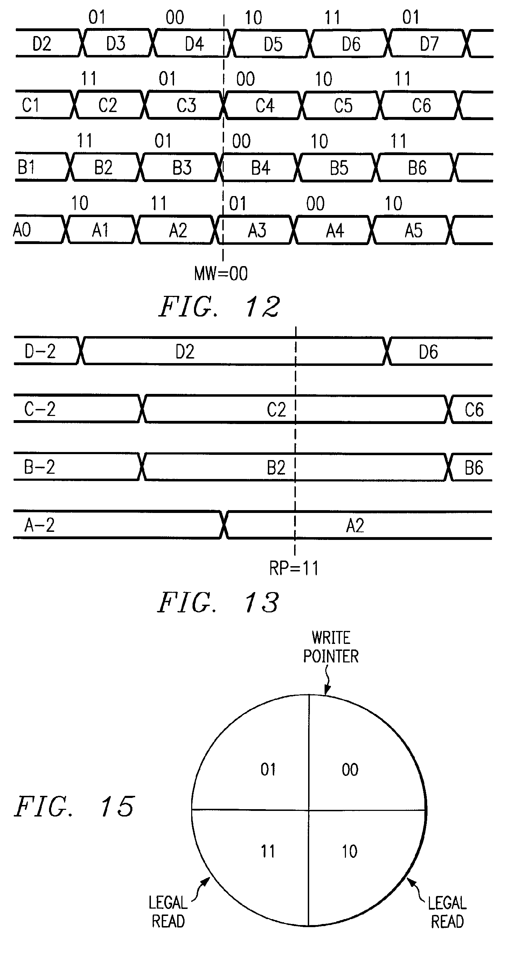

The position of each of the slave write pointers is sampled in the circuit when the master write pointer (MW) enters sector 00. The maximum distance between the master write pointer and a legal slave pointer is 90 degrees of the phase wheel of Figure 9 (or one whole clock cycle), since any greater distance would put the legal slave write pointer into sector 11, which is impermissible. Thus the second line of the timing diagram of Figure 11 shows the legal slave write pointer the furthest allowable distance from the master write pointer and is termed the worst case legal slave write pointer (WCLSW). The position of the worst case legal slave write pointer (WCLSW) relative to the master write pointer and the read pointer is shown on the phase diagram of Figure 9.

The third line of Figure 10 represents an illegal slave write pointer (ISW). When the master write pointer (MW) is in sector 00, the illegal slave write pointer is in sector 10. Since the position of each of the slave write pointers is sampled when the master write pointer enters sector 00, the maximum distance between the master write pointer and the illegal slave pointer in the 10 sector is just under 180 degrees of the phase wheel (or just under two whole clock cycles), since the illegal slave write pointer could be on the border of sectors 10 and 11 when the pointers are sampled.

The fourth line of Figure 10 represents the illegal slave write pointer of the third line when it is the maximum distance away from the master write pointer (i.e. the worst case illegal write pointer) and is labelled WCISW. In the worst case position, when the master write pointer enters sector 00, the slave write pointer is in sector 10 but almost immediately changes to sector 11. Thus, for most of the time, the worst case illegal slave write pointer (WCISW) is in the same sector as the read pointer (RP). This is clearly impermissible, since, for most of the time, the same register would be written to as read from. Thus, it is impermissible to allow a slave write pointer to be in sector 10 when the master write pointer (MW) is in sector 00.

The positions of the illegal slave write pointer (ISW) and the worst case illegal slave write pointer (WCISW) are shown on the phase diagram of Figure 9.

Refer back to Figure 8. The read pointer is initially set arbitrarily (according to the output of the counter 72 from which it is derived) and is synchronised with the read clock (which is also the write clock for the master channel 70). The master write pointer MW is set two sectors apart from the read pointer, as discussed above. The read pointer and the read clock are distributed to the control circuits 63 of each of the slave channels 64, 66 and 68.

As discussed above, the value of each of the slave write pointers is sampled as the master write pointer (MW) enters sector 00 (i.e. the position shown in Figure 9). The sampling of the slave write pointers is performed by control circuits 63 of slave channels 64, 66 and 68 on detecting that the read pointer has just entered sector 11. If, on sampling, the slave write pointer is in a legal state, the control circuit simply increments the slave write pointer on each clock signal from the local write clock (not the read clock). If, however, the slave write pointer is in an illegal state, the control circuit prevents that slave write pointer from being incremented for one clock cycle of the local clock (i.e. the slave write pointer is stalled for one cycle).

The slave write pointers are sampled regularly to ensure that they are in the correct sector and are adjusted by one sector at a time if they are not in the correct sector. If a slave write pointer is in an illegal state, this can only be either sector 11 or sector 10. If the slave write pointer is in sector 10, then preventing it from being incremented once should bring the pointer to a legal state. The worst case (with the slave write pointer in sector 11) requires the pointer to be prevented from incrementing twice. Since the sampling only occurs when the master write pointer enters sector 00, it will take two complete cycles of the phase diagram (eight clock cycles) to force the slave write pointer into a legal state.

Alternative embodiments of the invention monitor and correct the slave write pointers more often. This provides a more dynamic system that would be able to react more quickly but would have the disadvantage of increasing the likelihood of instability. The system is most likely to be used in circumstances that, after an initial set-up period in which all of the pointers are set to legal values, the slave write pointer would need to be adjusted quite infrequently. During the initial set-up period, training sequence data may be transmitted to allow the circuit to be initialised without risking the loss of live data. Accordingly, sampling only when the master write pointer enters sector 00 will be adequate for most applications.

As discussed above, the phase relationships between the channels is arbitrary and one of those channels is arbitrarily selected as the master. The master channel could be the earliest channel, the latest channel, or somewhere in between. Thus a slave channel could be up to a whole clock cycle (or 90 degrees on the phase wheel of Figure 9) ahead or behind the master channel.

It can be seen from Figure 9 that a channel that is a whole cycle behind the master channel is permissible since, when the master write pointer becomes 00, the slave write pointer becomes 01, which is permissible. However, from a channel that is a whole cycle ahead of the master channel, when the master write pointer becomes 00, the slave write pointer becomes 10, which is impermissible.

Thus, the slave write pointer for a channel that is one cycle ahead of the master will be stalled for one cycle so that it will appear to be in phase with the master write pointer. In other words, a channel that is a whole cycle ahead of the master will be treated as if it is in phase. This one cycle delay must be compensated for in the variable depth pipeline 17. This is the reason why a 9-symbol variable depth pipeline is used (see Figure 4) even though the maximum skew of 80-bits that is allowed by the system corresponds to only 8 symbols of data.

When the master write pointer MW enters sector 00, the most significant bit (msb) of all the legal slave write pointers is 0 and the msb of all illegal slave write pointers is 1. Thus the control function is implemented in the preferred embodiment by control circuits 63 by simply detecting whether the msb of the local slave write pointer is 0 when the master write pointer enters sector 00 (in which case the local write pointer is incremented) or whether the msb of the local slave write pointer is 1 (in which case the local write pointer is stalled i.e. not incremented for one cycle).

When the master write pointer is at 00, the slave write pointers are sampled using the read clock. However, as noted above, each write clock has an arbitrary phase relationship with respect to the master write clocks. Accordingly, a slave write pointer could be changing at the time at which it is sampled by the read clock and, in such a circumstance, it cannot be guaranteed whether the new or the old value for the write pointer will be sampled. However, by using a gray code for the read and write pointers, the msb of a legal slave write pointer will be 0, there is no need to sample the lsb, which may be changing from 1 to 0 (if the slave write pointer is changing from 01 to 00).

Thus, the msb of each slave write pointer is sampled using the read pointer and, if the msb is 1, the associated slave write pointer must be stalled for one cycle. A suitable stall signal can be achieved using the circuit of Figure 11.

The circuit of Figure 11 comprises flip-flops 74, 75 and 76 and an AND gate 77. The D-input of flip-flop 74 is coupled to a data input, the Q-output of flip-flops 74 and 75 are connected to the D-inputs of flip-flops 75 and 76 respectively, the D-input of flip-flop 76 is also connected to the first input of AND gate 77 and the Q-output of flip-flop 76 is coupled to a second, inverting, input of AND gate 77. The clock input of each of flip-flops 74, 75 and 76 is connected to the local write clock signal. The output of AND gate 77 is a stall signal.

The data input is the sampled msb of the write pointer of the relevant channel and is low when the write pointer is in a legal state when it is sampled and high when the write pointer is in an illegal state. As discussed above, the msb is sampled by the read clock, however, since the stall signal is used to stall the write pointer, the stall signal must be synchronised to the local write clock signal. Flip-flops 74 and 75 act as a synchronising circuit so that the Q-output of flip-flop 75 is a delayed version of the data signal that is synchronised to the local write clock.

AND gate 77 produces a one-cycle STALL pulse whenever the input of flip-flop 76 is high and the output of flip-flop 76 is low. Thus, when a data signal '1' is propagated through the chain of flip-flops, the output of all of which were previously '0', a one-cycle STALL signal will be generated when the data '1' reaches the D-input of flip-flop 76. The STALL signal is synchronised to the local write clock and is used to stall the local write pointer for one cycle of the local write clock.

The time between an illegal msb being discovered and the stall signal being generated will be a small number of cycles of the local write clock. This number of cycles is not fixed but this does not matter since it does not matter what the value of the slave write pointer is when that pointer is stalled for one cycle.

The circuit of Figure 11 must be reset after a stall event so that the Q-outputs of each of flip-flops 74, 75 and 76 is set to zero.

The operation of the converter circuit 16 shown in Figure 8 is shown with reference to the timing diagram of Figure 12. Figure 12 shows four data channels (labelled A, B, C and D). Channel B is the master channel, channel C is almost in phase with channel B, channel D is early with respect to channel B and channel A is late with respect to channel B. Figure 12 also shows, for each channel, the value of the local write pointer at each transition. The dotted line in Figure 12 is the point at which the write pointer of channel B (the master write pointer) becomes 00 i.e. the point at which the slave write pointers are sampled by the read clock.

When the master write pointer becomes 00, the local write pointer for channel C (which is almost in phase with the master channel) is changing and could be read as either 01 (the state it is changing from) or 00 (the state it is changing to). However, both of those values are legal states, so whichever state is read, the write pointer for channel C will be incremented.

When the master write pointer becomes 00, the local write pointer for channel D is about to (but has not) changed from 00 to 10. Accordingly, the write pointer for channel D is in a legal state (00). However, if channel D was slightly earlier, so that that change of state had already occurred, the write pointer would be in an illegal state (10) and the write pointer would be stalled. Accordingly, channel D is almost as early as it could legally be.

When the master write pointer becomes 00, the local write pointer for channel A, the local write pointer has just changed from 11 (an illegal state) to 01 (a legal state). Accordingly, the write pointer for channel A is in a legal state. However, if channel A was slightly later, so that that change of state had not occurred, the write pointer would be in an illegal state (11) and the write pointer would be stalled. Indeed, on the next sample (after one stall), the local write pointer would still be in an illegal state (10) and so the write pointer would be stalled a second time before it reached a legal state. Accordingly, channel A is almost as late as it could legally be.

Figure 13 shows the contents of registers 46 (where RP=11) for each of the channels A, B, C and D. As can be seen from Figure 12, the data symbols A2, B2 C2 or D2 (and later A6, B6, C6 and D6) are written into the respective registers 46 (when the value of the write pointer is 11).

Figure 13 also shows, as a dotted line, the point at which the read pointer is 11 (i.e. when the write pointer is 00). The read pointer is 11 exactly two clock cycles after the write pointer of the master channel (channel B) is 11. As can be seen from Figure 13, the 40-bit data word D2 C2 B2 A2 is reliably output from the receiver when the read pointer is 11. The next time the read pointer is 11, the output of the receiver will be the data word D6 C6 B6 A6.

As described above with reference to Figure 12, when a channel is almost 360 degrees ahead of the master channel, when the local write pointer is sampled, it will be about to move from 00 (a permissible sector) to 10 (in impermissible sector). When a channel is almost 360 degrees behind the master channel, when the local write pointer of that channel is sampled, it will have just moved from 11 (an impermissilbe sector) to 01 (a permissible sector). Accordingly, channels that are almost 360 degrees ahead of or almost 360 degrees behind the master channel are permissible.

However, the phase of each channel with respect to another channel varies slightly over time; this effect is commonly known as jitter. Jitter may cause a channel that is almost 360 degrees ahead of or behind the master channel to become either slightly more that 360 degrees ahead of or slightly more that 360 degrees behind the master channel. As this condition may not occur very often, it is likely to result in the system running error free for some time before jitter suddenly causes a re-alignment to occur, with the resulting loss of data.

Depending on the application, occasional realignment caused by jitter may or may not be acceptable.

Since jitter is noise, it is typically cyclical. Therefore, a signal that has moved over the alignment threshed into an impermissible sector due to jitter is likely to move back into the permissible sector.

The phase wheel of Figure 9 is split into four sectors that are determined by clock edges. However, the actual illegal zones are determined by the setup and hold times of the flip-flops used. As long as these setup and hold time are not violated, the slave write pointer can deviate some way into an impermissible sector of the phase wheel without causing a problem.

A number of techniques can be employed to prevent the unnecessary realignment of a channel as the result of a temporary incursion into an impermissible sector of the phase wheel caused by jitter.

For example, minor incursions into the impermissible zone may be allowed. This may be implemented by taking additional samples of the local write pointer.

A sample of the slave write pointer may be taken slightly delayed from the main sample. If the main write pointer sample process detects that one of the channels is in zone 11 (an impermissible zone), the channel will not be realigned unless the delayed pointer sample is also in the illegal zone. Thus if the slave write pointer moves to zone 01 (a permissible zone) before the second, slightly delayed, sample is taken (demonstrating that only a minor incursion into the impermissible zone had occurred), then the system will not be realigned.

Similarly, a sample of the slave write pointer may be taken slightly before the main sample. If the main write pointer sample process detects that one of the channels is in zone 10 (an impermissible zone), the channel will not be realigned unless the earlier pointer sample is also in the illegal zone. Thus if the slave write pointer moves from zone 00 (a permissible zone) to zone 10 (an impermissible zone) just before main sample (demonstrating that only a minor incursion into the impermissible zone had occurred), then the system will not be realigned.

Alternatively, the four flip-flop circular buffer of Figure 7 could be replaced with a longer buffer (of perhaps 6 or 8 flip-flops) in order to distinguish between minor and major incursions into the impermissible zones of the phase wheel of Figure 9.

An additional flip-flop may be provided for each channel to indicate whether the channel is aligned or not. The system may allow jitter to cause realignment when the channel is not yet aligned, since this will not cause any loss of data.

The mechanism by which samples of the slave write clocks are taken slightly in advance and/or slightly after the main sample to allow minor incursions into the impermissible zone may also be used when deciding whether the channel is aligned. In such circumstances, all such samples should indicate that the slave write pointer is in a permissible zone before the state of the flip-flop is changed to indicate that the channel is aligned. This will reduce the likelihood that the channel will be aligned with a slave write pointer very close to the impermissible zone and therefore reduce the likelihood of later re-alignment caused by the slave write pointer drifting into the impermissible zone.

Many modifications to the receiver system described above are contemplated. For example, the four-state phase diagram referred to above could be replaced with a different number of phase states, such as six. As with the four-sector system described above, the slave write pointers would not be permitted in the same sector or the previous sector to the read pointer.

The example of Figures 12 and 13 show the operation of the present invention in normal operation. In order to reach such a condition, the system must be set up. The set up procedure uses a training sequence to allow the control circuit 28 to set up the symbol offset circuit 14 so that the incoming symbols are correctly aligned. Further, the set up period allows the slave write pointers of the converter circuit to settle into legal states.

After the initial set up period, the system is constantly monitored to adjust to any changes e.g. due to variations in the delays of the various channels. Each time a slave write pointer is adjusted, data is lost and so such adjustments are undesirable. In some systems, data may be transferred in streams that are separated by periods of inactivity. In such systems, training data can be transmitted during the periods of inactivity to minimise the occurrence of write pointer correction (and the associated data loss) when live data is being transmitted.

The system may allow jitter to cause realignment during the training phase but not during the normal use of the system. This removes the need to check for minor incursions into illegal zones since any incursions into an illegal zone will cause realignment during the training phase but will not cause a realignment during the normal use of the system.

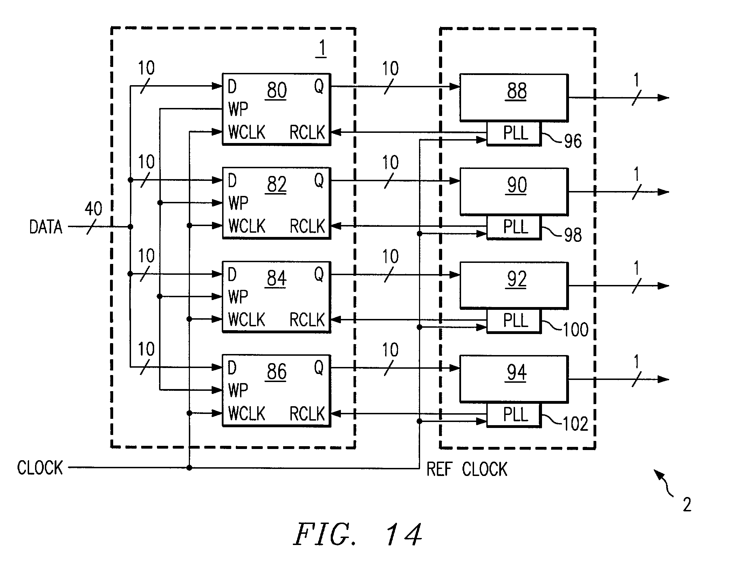

The principles of the circular buffer used in the receiver system described above are also applicable to transmitter systems. Figure 14 shows a block diagram of a transmitter in accordance with the present invention, that transmitter implementing the transmitter 2 of Figure 1. The transmitter comprises a converter 1, four parallel-to-serial converters 88, 90, 92 and 94 and four phase locked loops (PLLs) 96, 98, 100 and 102, each parallel-to-serial converter being coupled to one of said PLLs. The converter 1 comprises four circular buffers 80, 82, 84 and 86, each circular buffer having a 10-bit data input (D), a 10-bit data output (Q), a write pointer input or output (WP), a write clock input (WClk) and a read clock input (RClk). Each 10-bit data output (Q) is provided as an input to one of said parallel-to-serial converters 88, 90, 92 and 94. Each parallel-to-serial converter generates a serial data stream that is synchronised to a clock signal derived from the associated PLL.

The transmitter 2 has a 40-bit data input and a clock input associated therewith. The 40-bit data input is divided into four 10-bit data signals, with each 10-bit data signal being provided as a 10-bit data input to one of said circular buffers 80, 82, 84 and 86. The clock input to the transmitter 2 is provided as the WClk input to each of said circular buffers and as a reference clock (RClk) for each of said phase locked loops. Each phase locked loop generates a clock signal for the associated parallel-to-serial converter and generates a read clock (RClk) for the associated circular buffer.

Each of said circular buffers 80, 82, 84 and 86 receives the same write clock and, accordingly, each of said circular buffers receives the same write pointer so that, for each circular buffer, the same register is being written to at any one time. This is because the incoming data to be written to the circular buffer registers is aligned to that write clock signal. In the example of Figure 14, the write pointer is set arbitrarily by circular buffer 80 and distributed to the other circular buffers, but it could be done in others ways.

As with the receiver circuit described above, where the circular buffer comprises four data registers, the read pointers should ideally be two registers away from the write pointers.

Although the frequency output by PLLs 90 and 92 will be the same as the clock input to the circular buffer, there may be a significant phase difference between the clock signals.

Figure 15 is a phase diagram of the transmitter. In the example of Figure 15, the write pointer has just entered sector 00. As shown in the phase diagram, read pointers in sectors 10 or 11 at this point are legal. Read pointers in either sector 01 or 00 are illegal. The read pointers of each circular buffer are sampled when the write pointer enters sector 00 (i.e. the position shown in Figure 15). Any read pointer in either sector 01 or sector 00 is not incremented for one cycle, in the same manner as the write pointer in the receiver version described above may be stalled for one cycle.

As with the receiver, the master channel is chosen arbitrarily and may be the most advanced of the channels, the most retarded, or somewhere in between. Thus, a channel of the transmitter may be up to 360 degrees ahead of or behind the master channel.

A channel that is 360 degrees ahead of the master channel will be stalled by one cycle and will be transmitted as if it is exactly aligned with the master channel. The stalling process adds an additional symbol of offset to that channel, in addition to any offset that may be caused by the transmission process. The potential for this additional symbol of offset requires an additional stage in the variable depth FIFO at the receiver stage if the overall transmitter-receiver system is to be able to deal with 8-symbols of transmission delay, as outlined above.

It is not essential that the transmitter is includes a phase locked loop for each channel. For example, a single phase locked loop could be used to generate a single clock to control all four of the parallel-to-serial converters 88, 90, 92 and 102. Another alternative is to use two phase locked loops, each being used to control two of the four parallel-to-serial converters.

## Claims

1. A circuit having a plurality of channels, each channel having a data input, a data output and a circular buffer disposed between the data input and the data output, the circular buffer comprising a plurality of latches,
wherein:
each circular buffer comprises means for writing data at said data input to a first selected latch of said circular buffer and means for providing data from a second selected latch of said circular buffer at said data output,
for each circular buffer, the first selected latch is clocked by a local write clock signal, each channel having its own local write clock signal;
for each circular buffer, data is provided at said data output under the control of a read clock signal, the read clock signal being common to all channels, whereby data at each data output has substantially the same phase.

2. A circuit as claimed in claim 1, wherein each local write clock signal has a phase determined by the phase of the data associated with the data input of the respective channel.

3. A circuit as claimed in claim 2, wherein each local write clock signal has a phase aligned to provide optimum sampling of the data associated with the data input of the respective channel.

4. A circuit as claimed in any preceding claim, wherein the read clock signal is the local write clock signal of a selected one of said plurality of channels, the selected channel being a master channel, the other channels being slave channels.

5. A circuit as claimed in any preceding claim, wherein the read clock signal is provided as a clock output of the circuit.

6. A circuit as claimed in any preceding claim, wherein, for each channel, said first selected latch is determined by the value of a write pointer and said second selected latch is determined by the value of a read pointer.

7. A circuit as claimed in claim 6, wherein the value of the read pointer is the same for each of said plurality of channels.

8. A circuit as claimed in claim 7, wherein the read pointer is incremented using the read clock signal.

9. A circuit as claimed in any one of claims 6 to 8, wherein, for each channel, the write pointer is incremented by the respective local write clock signal.

10. A circuit as claimed in claim 9, wherein the write pointer of the master channel is fixed relative to the read pointer, that write pointer being a master write pointer, the other write pointers being slave write pointers.

11. A circuit as claimed in claim 10, wherein the value of each slave write pointer is sampled and wherein, if, on sampling, a slave write pointer is in an illegal state relative to the read pointer, that slave write pointer is prevented from being incremented for one cycle of the respective local write clock.

12. A circuit as claimed in claim 11, wherein a slave write pointer is in an illegal state relative to the read pointer if the first selected one of said plurality of data storage devices of the respective slave channel is either the same as the second selected latch or is the same as the second selected latch on the previous read clock cycle.

13. A circuit as claimed in claim 12, wherein the slave write pointers are sampled each time the read pointer enters a predetermined state.

14. A circuit as claimed in any one of claims 11 to 13, wherein a slave write pointer is not prevented from being incremented if that slave write pointer makes only a minor incursion into the illegal state.

15. A circuit as claimed in claim 14, wherein an additional sample of the slave write pointer is taken, slightly delayed from the first, and wherein the slave write pointer is only prevented from being incremented if both pointers are in the illegal state.

16. A circuit as claimed in claim 14 or claim 15, wherein an additional sample of the local write pointer is taken, slightly in advance of the first, and wherein the slave write pointer is only prevented from being incremented when all the pointers are in the illegal state.

17. A circuit as claimed in any one of claims 6 to 16, wherein the read and write pointers are implemented using a Gray code.

18. A circuit as claimed in any preceding claim, wherein said circular buffer comprises four latches.

19. A circuit as claimed in claim 18 when dependent on claim 10, wherein the master write channel is fixed such that, for the master channel, the second selected latch is two latches away from the first selected latch.

20. A circuit as claimed in any one of claims 1 to 17, wherein said circular buffer comprises six latches.

21. A circuit as claimed in claim 20, when dependent on claim 10, wherein the master write channel is fixed such that, for the master channel, the second selected latch is three latches away from the first selected latch.

22. A circuit as claimed in any preceding claim, wherein the means for writing data at said data input to the first selected latch comprises a select circuit for each latch in the plurality, one of said select circuits passing the local write clock signal to the first selected latch, the other select circuits blocking the local write clock signal.

23. A circuit as claimed in any one of claims 1 to 21, wherein a multiplexing arrangement is provided for each latch in the plurality, each multiplexing arrangement having a first input coupled to the data input of the circuit, a second input coupled to the output of the respective latch and an output coupled to the input of the latch, the multiplexing arrangement associated with the first selected latch passing the data at the data input to that latch, the other multiplexing arrangement passing the respective latch outputs to the respective latch inputs.

24. A circuit as claimed in any preceding claim, wherein the means for providing data from a second selected latch of said circular buffer at said data output is a multiplexer.

25. A circuit as claimed in any preceding claim and further comprising a symbol offset circuit comprising a pipeline for each channel of the plurality of channels, each pipeline having an input for receiving symbols of data from a previous stage of the circuit and an output for passing symbols of data to a next stage of the circuit, the pipeline delaying the symbols of data by an integer number of symbol cycles, the length of the delay being determined by the value of a control signal.

26. A circuit as claimed in claim 25, wherein the next stage of the circuit comprises said plurality of circular buffers.

27. A circuit as claimed in claim 25, wherein the previous stage of the circuit comprises said plurality of circular buffers.

28. A circuit as claimed in any one of claims 25 to 27, wherein each pipeline is a variable depth pipeline comprising a plurality of data storage devices connected in series, the input of said pipeline being the data input of a first of said plurality of data storage devices, the output of the pipeline being the output of a selected one of said data storage device, said control signal selecting said selected one, said data registers being clocked by the local write clock signal of the respective channel.

29. A circuit as claimed in claim 28, wherein the output of the pipeline is selected using a multiplexer, the output of each of said plurality of data storage device being coupled to an input of said multiplexer.

30. A circuit as claimed in any one of claims 25 to 29, wherein said symbol offset circuit is arranged to delay the symbols received at said plurality of inputs such that a single data word received across all of said plurality of channels is correctly aligned at the output of said circuit.

31. A circuit as claimed in any one of claims 25 to 30 and further comprising a control circuit for receiving the outputs of the circuit and generating said control signal for each of said pipelines.

32. A circuit as claimed in claim 31, wherein the control circuit adjusts the delays of said pipelines such that a repeating reserved word is aligned across said plurality of channels.

33. A circuit as claimed in any preceding claim, wherein each channel further comprises a converter for converting a serial data stream at the input of the channel into symbols of data for processing by the circular buffer.

34. A circuit as claimed in claim 33, wherein said converter generates a clock signal having a phase derived from the phase of the symbols of data output by the converter, said clock signal being the local write clock signal.

35. A circuit as claimed claim 33 or claim 34, wherein said converter is arranged to detect symbol boundaries and to convert the serial input into symbols correctly aligned along those symbol boundaries.

36. A circuit as claimed in any one of claims 33 to 35, wherein said converter means is a differential-to-parallel converter.

37. A circuit having a plurality of channels, each channel having a data input for receiving data for transmission, a data output and a circular buffer disposed between the data input and the data output, the circular buffer comprising a plurality of latches,
wherein:
each circular buffer comprises means for writing data at said data input to a first selected latch of said circular buffer and means for providing data from a second selected latch of said circular buffer at said data output;
for each circular buffer, the first selected latch is clocked by a write clock signal that is common to all channels;
for each circular buffer, data is provided at said data output under the control of a read clock signal such that each data output has a phase aligned with the respective read clock signal.

38. A circuit as claimed in claim 37, wherein the first selected one of said plurality of data storage devices is determined by the value of a write pointer and the second selected one of said plurality of data storage devices is determined by the value of a read pointer.

39. A circuit as claimed in claim 38, wherein the value of the write pointer is the same for each of said plurality of circular buffers.

40. A circuit as claimed in any one of claims 37 to 39, wherein each read pointer is incremented by the read clock signal of the respective channel.

41. A circuit as claimed in any one of claims 37 to 40, wherein said read clock signal is generated by a phase locked loop.

42. A circuit as claimed in claim 38 or any one of claims 39 to 41 when dependent on claim 38, wherein the value of each read pointer is sampled and wherein if, on sampling, a read pointer is in an illegal state relative to the write pointer, that read pointer is prevented from being incremented for one cycle of the local read clock signal.

43. A circuit as claimed in claim 42, wherein a read pointer is in an illegal state relative to the write pointer if the second selected one of said plurality of data storage devices is either the same as the first selected latch or is the same as the first selected latch on the previous write clock cycle.

44. A circuit as claimed in claim 43, wherein the read pointers are sampled each time the write pointer enters a predetermined state.

45. A circuit as claimed in any one of claims 42 to 44, wherein a read pointer is not prevented from being incremented if that read pointer makes only a minor incursion into the illegal state.

46. A circuit as claimed in claim 45, wherein an additional sample of the read pointer is taken, slightly delayed from the first, and wherein the read pointer is only prevented from being incremented if both pointers are in the illegal state.

47. A circuit as claimed in claim 45 or claim 46, wherein an additional sample of the read pointer is taken, slightly in advance of the first, and wherein the read pointer is only prevented from being incremented when all the pointers are in the illegal state.

48. A circuit as claimed in any one of claims 38 to 47, wherein the read pointer and the write pointer are each implemented using a Gray code.

49. A circuit as claimed in any one of claims 37 to 48, wherein said circular buffer comprises four latches.

50. A circuit as claimed in any one of claims 37 to 48, wherein said circular buffer comprises six latches.

51. A transmitter comprising a circuit as claimed in any one of claims 37 to 50 and a means for transmitting the signals at the outputs of said circuit.

52. A receiver comprising a circuit as claimed in any one of claims 1 to 36 and a means for receiving data for each of said plurality of channels.

53. A system comprising a transmitter as claimed in claim 51 and a receiver as claimed in claim 52.

54. A system as claimed in claim 53 and further comprising a data link coupling the outputs of the transmitter to respective inputs of the receiver.

55. A system as claimed in claim 54, wherein the data link is a copper wire.

56. A system as claimed in claim 54, wherein the data link is an optical link.

57. A method of converting data at inputs of a plurality of data channels into a single parallel data stream aligned to a read clock signal, the method comprising the steps of :
for each channel, writing the data received at the input to a first selected latch of a circular buffer, the first selected latch being clocked by a local write clock signal, each channel having its own write clock signal; and
for each channel, generating an output of the circular buffer by reading data from a second selected latch of said circular buffer under the control of the read clock signal, the read clock signal being common to all channels.

58. A method of converting data at inputs of a plurality of data channels aligned to a write clock signal into a plurality of outputs, each aligned to a local write clock signal, the method comprising the steps of :
for each channel, writing the data received at the input to a first selected latch of a circular buffer, the first selected latch being clocked by the write clock signal, the write clock signal being common to all channels; and
for each channel, generating an output of the circular buffer by reading data from a second selected latch of said circular buffer under the control of the read clock signal, each channel having its own read clock signal.
